# EUROPEAN PATENT SPECIFICATION

(11) **EP 1 642 775 B1**
(45) Date of publication and mention of the grant of the patent: **19.09.2007**
(21) Application number: 05256075.2
(22) Date of filing: 29.09.2005
(51) Int. Cl.: B60R 5/04

(54) **Luggage system for a vehicle**
Gepäckraumsystem für ein Fahrzeug
Compartiment de baggages pour véhicule

(30) Priority: 29.09.2004 GB 0421631
(43) Date of publication of application: 05.04.2006
(73) Proprietor: Nissan Motor Manufacturing (UK) Ltd., Bedfordshire MK43 0DB (GB)
(72) Inventor: Snowdon, Norman, Bedfordshire MK43 0DB (GB); Dickins, Philip, Bedfordshire MK43 0DB (GB)
(74) Representative: Holmes, Matthew William

(56) References cited:
- EP-A- 1 247 693
- EP-A- 1 350 673
- DE-U- 1 688 723
- FR-A- 2 785 243
- FR-A- 2 809 057

## Description

The invention relates to a luggage system for use in a vehicle and, in particular, a stable luggage system which provides a vehicle user with several alternative luggage carrying configurations.

The rear luggage compartment (e.g. the boot or trunk) of a vehicle is that volume located immediately behind the most rearward passenger seats. Typically, the rear luggage compartment is accessible by means of an up-and-over door. In larger vehicles, the luggage compartment is generally spacious, which means a significant height is available for carrying relatively tall items of luggage (e.g. furniture or suitcases). However, there are often circumstances in which a user wishes to carry smaller items of luggage in such spacious luggage compartments, so that it becomes necessary to stack individual items on top of one another to maximise use of the available volume. Stacking items on top of one another is not only inconvenient during loading and unloading but can also damage the items.

A further problem associated with luggage compartments, particularly those of the large variety, is that there is no easy way to separate different cargoes from one another. Users are often forced to store incompatible goods, such as, for example, building materials and foodstuffs, immediately next to each other, which can cause damage or lead to goods being spoilt. Furthermore, large luggage compartments are generally not suitable for carrying small quantities of goods, since goods are thrown around and damaged if there is too much empty space around them.

There have been attempts in the past to mitigate the above problems. For example, some larger luggage compartments are fitted with permanent storage boxes designed to hold shopping or other small items. It has also been suggested that a horizontal shelf could be introduced to allow more effective utilisation of space. Unfortunately, these prior art solutions lack flexibility and/or simplicity. Permanent storage boxes lead to a sacrifice in terms of overall luggage compartment volume and are thus inconvenient when a large amount of cargo is carried. Wherever a known luggage shelf is introduced, it becomes difficult to carry large cargo, whilst the problem of loose small items being thrown about remains.

EP1350673A discloses a rear luggage compartment structure for a hatchback vehicle including a trunk board comprising front and rear boards which is changeable between a normal position where the front and rear board are laid on front and rear parts of a luggage compartment floor, respectively, and a built-up position where the rear board is held upright and the front board is situated horizontally between a rear seat and the rear board held upright so as thereby to create a luggage storage space over the front board that is accessible from a passenger compartment and a secret box under the front board. However, the structure of EP1350673A does not provide the flexibility and stability desired by modem day users.

It is an object of the present invention to provide a luggage system for a vehicle which addresses or alleviates at least one of the problems associated with the prior art. Other aims and objectives of the invention will become apparent from the following description.

Broadly speaking, and according to a first aspect, the invention resides in a luggage system for use in a luggage storage compartment of a vehicle, the luggage storage compartment being defined, in part, by first and second opposed interior walls of the vehicle, the luggage system comprising: two or more movable boards for supporting luggage, wherein the movable boards are movable independently of one another; and support means for the movable boards, the support means including first and second support bars or ledges mountable on respective ones of the opposed interior walls, wherein the movable boards provide a first luggage storage configuration in which the boards are supported upon a floor of the luggage compartment and a second luggage storage configuration in which at least one of the movable boards is elevated above the luggage compartment floor, the support means being arranged to support at least one elevated one of the first and second movable boards in the second luggage storage configuration, characterised in that the luggage system includes means for stabilising at least one elevated one of the first and second movable boards when supported on the first and second support bars or ledges.

One advantage of the invention is that it provides a great degree of flexibility in configuring a luggage storage space by means of its two movable boards and their possible positions. A vehicle user can change easily between several different luggage carrying configurations, depending on his or her luggage carrying requirements, by moving at least one movable board between different configurations.

A further advantage of the invention is that it mitigates rattling and dislodging of at least one of the movable boards when in an elevated position.

Preferably, each of the first and second support bars may include at least one locating feature to prevent movement of at least one elevated one of the first and second movable boards, along a front-to-rear vehicle direction, when the second luggage compartment configuration is provided. Additionally or alternatively, to maximise the effectiveness of the stabilising means, at least one of the movable boards may advantageously comprise an indentation or formation for co-operation with the stabilising means.

Optionally, each of the movable boards may have first and second board sides, with the first and second board sides being mountable upon a respective one of the first and second support bars. Alternatively, each of the movable boards may have first and second board sides, the first and second board sides being mountable, in sliding fashion, within a channel defined in the respective one of the first and second support bars. Both these preferred configurations ensure that the boards are stabilised without hampering a user's ability to move the boards without the need for any tools. This means that, despite the stabilisation of the boards, the flexibility of the luggage storage system is maintained.

For flexibility and ease of use it is preferred that the movable boards are separate and distinct components. However, the boards may alternatively be connected to each other, for example movably, via a hinge.

Preferably, the boards comprise opposing luggage carrying planes. The luggage carrying planes may have similar or differing surfaces. Advantageously, to allow users further to configure the luggage system, at least one of the boards may comprise at least one luggage carrying plane having a surface with anti-slip properties. Anti-slip properties may, for instance, be imparted by a spread of rubber dimples. Optionally, one luggage carrying plane of each board may comprise a surface with anti-slip properties, with the remaining luggage carrying planes having a surface that matches a surface of the vehicle compartment. This enables users to choose between configurations where the boards provide at least one anti-slip luggage carrying plane and configurations where the ant-slip surfaces are not visible.

The movable boards may (individually or both) advantageously be rectangular or square, with one or more indentations or formations being located in the region of one or more of their corners. In such structures, one or more indentations may be triangular and configured so as effectively to cut off a corner of the board. This eases the manufacture of the boards and maximises their luggage carrying efficiency.

To provide the additional advantage of alleviating or mitigating rattling or dislocation of the boards when they are placed on the floor of the luggage compartment, the floor of the luggage compartment may include means for stabilising at least one movable board, when supported upon the floor. Preferably, the floor of the luggage compartment may include at least one locating feature to prevent movement of a movable board, along a front-to-rear vehicle direction, when supported on the floor. Additionally or alternatively, to maximise the effectiveness of the stabilising means of the floor of the luggage compartment, at least one of the movable boards may advantageously comprise an indentation or formation for co-operation with the stabilising means of the floor of the luggage compartment. Preferably, at least one of the movable boards contains at least one indentation appropriate for co-operating both with the stabilising means of the support bars and the stabilising means of the floor of the luggage compartment. It is particularly convenient for a board to have such dually compatible indentations since they contribute to the stability of the board both in its elevated position and when it is placed on the floor.

Advantageously, the boards of the luggage system may be movable to provide a third luggage compartment configuration in which at least one of the movable boards is arranged to be substantially vertical. The ability to provide such a third compartment configuration further improves the flexibility of the system, allowing it, for example to partition the luggage compartment lengthways. In another configuration, one of the boards may be elevated while another remains on the luggage compartment floor.

For ease of use, each of the movable boards may be provided with a handle for manoeuvring it between different luggage compartment configurations.

Expressed in another way, and according to a second aspect, the invention resides in a luggage system for use in a luggage storage compartment of a vehicle, the luggage storage compartment being defined, in part, by first and second opposed interior walls of the vehicle, the luggage storage system comprising: two or more movable boards for supporting luggage, wherein the movable boards are movable independently of one another; and support means for the movable boards, the support means including first and second support bars or ledges mountable on respective ones of the opposed interior walls, wherein: the movable boards provide a first luggage compartment configuration in which the boards are supported upon a floor of the luggage compartment; the support means are arranged to support the boards in a second luggage storage configuration in which at least one of the movable boards is elevated above the luggage compartment floor; and each of the first and second support bars includes means for stabilising the first and second boards when the second luggage compartment configuration is provided.

The preferred features described in relation to the first aspect of the invention are also preferred features of the second aspect of the invention.

Expressed in yet another way, and according to a third aspect, the present invention resides in a luggage system for use in a vehicle luggage compartment having a luggage compartment floor, the luggage system comprising: a first, movable board; and support means for supporting the first board in a first position in which the first board is substantially horizontal and at an elevated height above the luggage compartment floor and in a second position in which the first board forms a substantially vertical partition for the compartment, wherein, the support means includes means for stabilising the first board when at the elevated height and/or in the vertical position.

Conveniently, the first board is supportable upon the luggage compartment floor when in a third, substantially horizontal position.

It is advantageous for the luggage system according to the third aspect to comprise a second, movable board which is supportable by the support means and movable between a first position in which the second board is substantially horizontal and at an elevated height above the luggage compartment floor and a second position in which the second board forms a substantially vertical partition for the compartment. Where this is the case, the stabilising means may be configured to stabilise the first and/or second boards when at the elevated height and/or in the vertical positon. Each movable board may advantageously comprise an indentation or formation for co-operation with the stabilising means.

In order that this invention may be more readily understood, reference will now be made, by way of example, to Figures 1 to 8 of the accompanying drawings in which:
Figure 1 is a perspective view of a first embodiment of the present invention in a first configuration;
Figure 2 is a perspective view of the embodiment shown in Figure 1 in a second configuration;
Figure 3 is a perspective view of the embodiment shown in Figure 1, in a third configuration;
Figure 4 is a perspective view of the embodiment shown in Figure 1, in a fourth configuration;
Figure 5 is a perspective view of the embodiment shown in Figure 1, in a fifth configuration;
Figure 6 is a perspective view of a second embodiment of the invention, in a first configuration;
Figure 7 is a second perspective view of the embodiment shown in Figure 6, in a first configuration; and
Figure 8 is a perspective view of the embodiment shown in Figure 6, in a second configuration.

### DESCRIPTION OF PREFERRED EMBODIMENTS

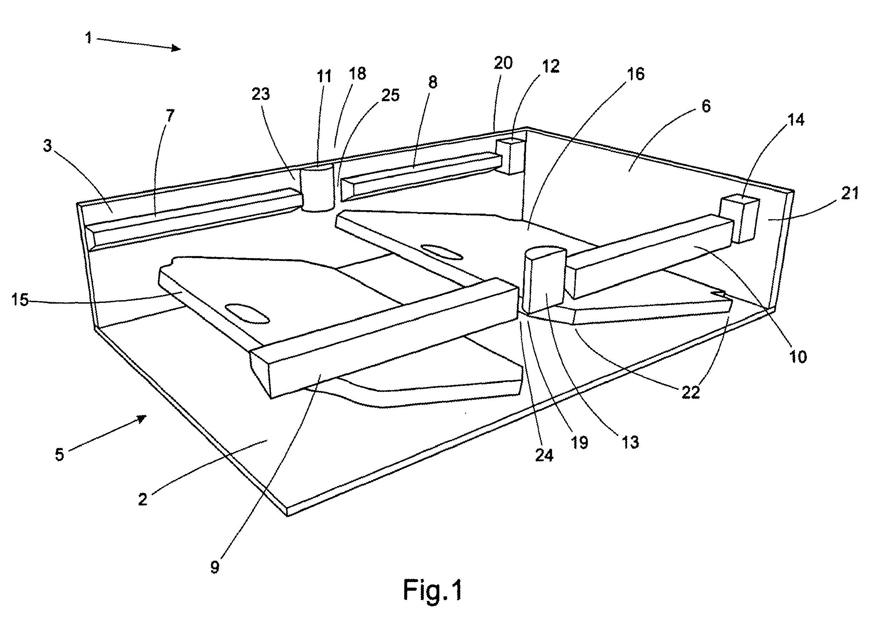

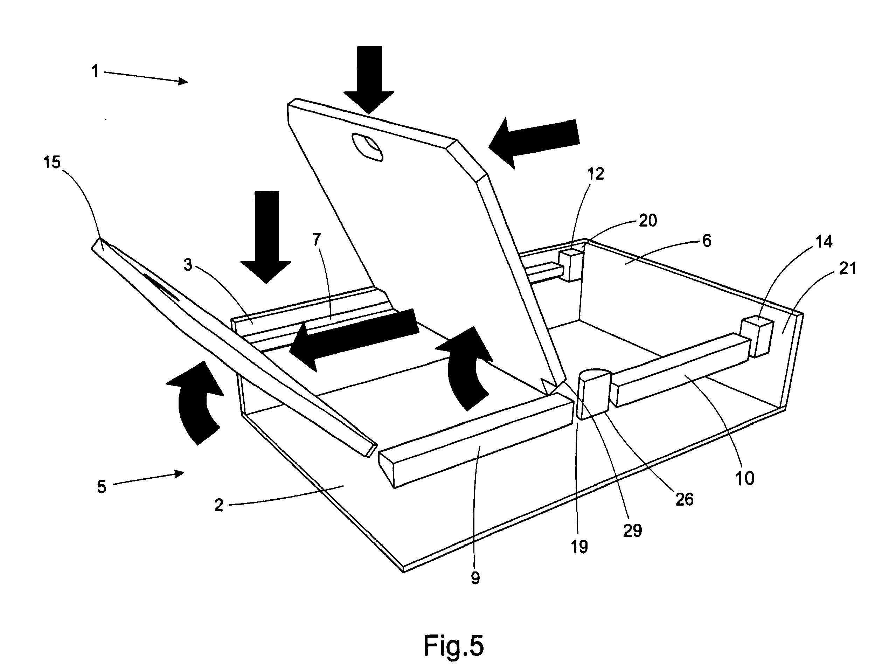

Referring firstly to Figure 1 of the drawings, a luggage system according to a first embodiment of the invention is installed in a luggage compartment (1) having a luggage compartment floor (2), first and second side walls (3, 4), a front end (5) and a rear wall (6). The second side wall is not shown in any of Figures 1 to 5 for reasons of clarity.

The luggage system comprises first and second pairs of horizontal support members (7, 8, 9, 10), first and second pairs of vertical support members (11, 12, 13, 14), and first and second movable boards (15, 16) each having a handle (17) for ease of movement.

The horizontal support members (7, 8, 9, 10) are affixed to the side walls (3, 4) of the luggage compartment (1) around 30 cm above the luggage compartment floor (2). Each horizontal support member is elongate and forms a horizontal ledge with one of its longer sides. Specifically, the horizontal support members (7, 8) forming the first pair are both affixed to the first side wall (3) of the luggage compartment, spaced apart by a first gap (18) of about 20 cm, to form two horizontal ledges on the first side wall, whilst the horizontal support members (9, 10) of the second pair precisely mirror this arrangement on the second side wall (thus forming a corresponding second gap (19) between them). Each pair of horizontal support members, with its associated gap, spans substantially the whole length of its side wall, but third and fourth gaps (20, 21), each measuring about 15 cm, are left between the rear wall (6) and the rear horizontal support members (8, 10) of the first and second pair respectively. In combination, the horizontal support members (7, 8, 9, 10) create four separate horizontal ledges suitable for supporting the first and second movable boards (15, 16) horizontally.

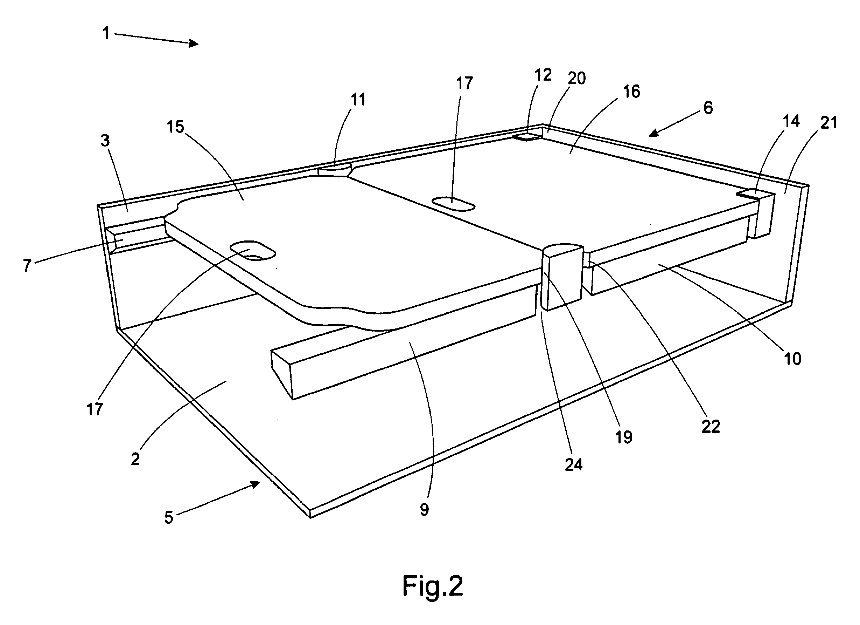

The first and second movable boards (15, 16) are sized such that they can stably rest on the ledges formed by the horizontal support members (7, 8, 9, 10) to define (in combination) a higher surface or platform covering the whole luggage compartment, as shown in Figure 2. Thus, referring now to Figure 2, when both movable boards are resting on the horizontal support members (7, 8, 9, 10), a user of the luggage system can store cargo both on a first, lower surface, formed by the luggage compartment floor, and on a second, higher surface formed by the movable boards (15, 16). This may be advantageous when a large number of small items needs to be transported or if two different types of cargo need to be kept separate. In situations where it is not beneficial (or even a hindrance) to have two surfaces, the movable boards (15, 16) can be taken off the ledges provided by the horizontal support members and placed on the luggage compartment floor (2), as illustrated in Figure 1, such that there is only a single surface for carrying luggage. The floor (2) comprises additional stabilising features in the form of supporting protrusions (not shown) which hold the boards in place when placed upon the floor (2). The boards (15, 16) may be moved individually to create configurations where one board is on the luggage compartment floor (2) whilst the other forms a (partial) second, higher surface.

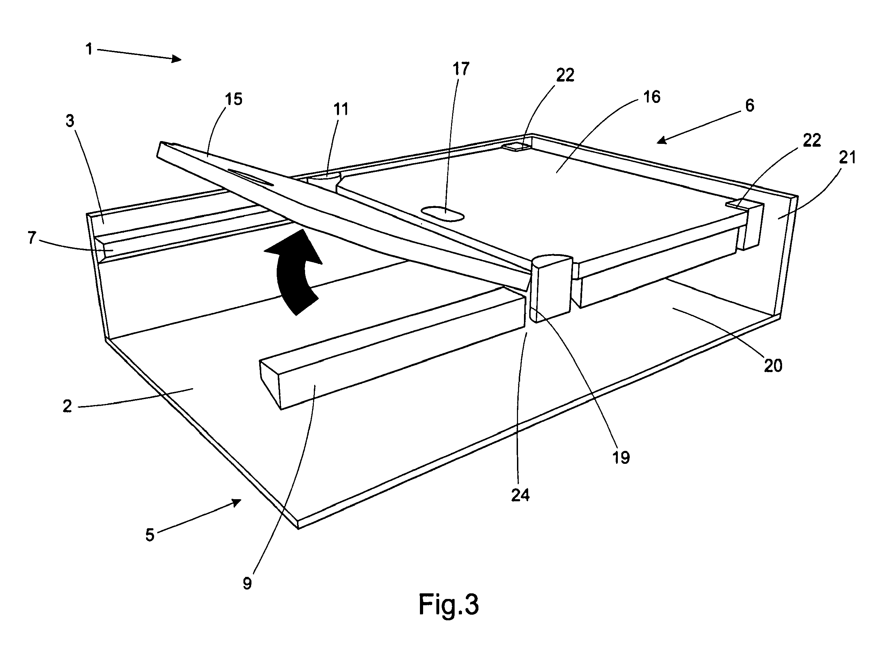

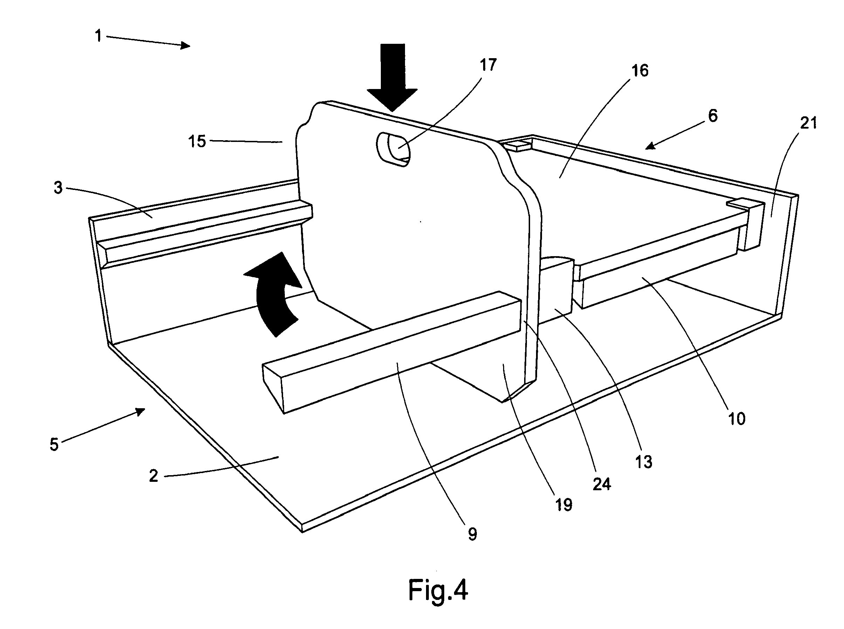

Referring again to Figure 1 and 2, the main function of the vertical support members (11, 12, 13, 14) of the luggage system is to help to stabilise the boards (15, 16) when supported in their horizontal positions on the ledges. Furthermore, two of the vertical support members (11, 13) have the additional function of defining two pairs of slots for supporting the boards in vertical positions, as illustrated by Figures 3 and 4.

The first and second pairs of vertical support members (11, 12, 13, 14) are affixed to the first and second side walls (3, 4) respectively. Each pair comprises a semi-cylindrical vertical support member and a block shaped vertical support member. The semi-cylindrical vertical support members (11, 13) of the first and second pairs are affixed to their associated side wall in the centre of the first or second gap (18, 19) respectively, with their curved surfaces facing towards the inside of the luggage compartment (1). The block shaped vertical support members (12, 14) of the first and second pair are affixed to their associated side wall in the centre of the third or fourth (20, 21) gap respectively. It will be appreciated that the shape of the support members described in relation to this embodiment is purely exemplary. Whilst cylindrical and block shaped vertical support members mitigate rattling and dislocation of the boards, an equally effective alternative embodiment of the invention comprises prism shaped vertical support members of triangular cross section, being identical to the first embodiment of the invention in all other respects.

To allow the vertical support members (11, 12, 13, 14) of the first embodiment to stabilise the movable boards, they each project above the level of the horizontal ledges formed by the vertical support members (7, 8, 9, 10). When the movable boards (15, 16) rest upon the ledges, they are prevented from sliding around because they are in contact with the projecting portions of the vertical support members (11, 12, 13, 14). The movable boards (15, 16) have indentations (22) specifically designed to engage with the projections to maximise the stabilising effect of the vertical support members (11, 12, 13, 14).

The front and rear removable boards (33, 34) comprise respective first and second opposing luggage carrying surfaces. The respective first luggage carrying surfaces comprise rubber dimples (not shown) which provide an anti-slip surface.

Referring again to Figure 1, since the two semi-cylindrical vertical support members (11, 13) are sized such that they do not completely fill the first and second gaps (18, 19), each creates two vertical slots in combination with the facing ends of the associated pair of horizontal support members. The gaps between the front facing edges of the semi-cylindrical vertical support members (11, 13) and the associated one of the horizontal support members (i.e. the horizontal support members (7, 9) towards the front of the compartment) act as a first pair of slots (23, 24) into which a movable board can be inserted to form a vertical partition, as shown in Figures 3 and 4. Similarly, it is also possible to create a partition by inserting a movable board into a second pair of slots (25, 26) formed between the rear facing edges of the semi-cylindrical vertical support members (11, 13) and the horizontal support members (8, 10) towards the rear of the compartment.

The vertical slots (23, 24, 25, 26) provide the luggage system with additional flexibility since, in combination with the horizontal ledges, they allow partitioning of the luggage space in different ways. Numerous configurations can be achieved by moving each of the movable boards (15, 16) between (i) a horizontal position on the ledges (ii) a horizontal position on the floor (2) of the luggage compartment and (iii) a vertical position in a pair of slots. The user thus has a wide variety of partitioning and shelving solutions to choose from, which can all be created relatively easily - especially since the movable boards are equipped with handles (17) that allow them to be brought into their desired positions with minimum effort.

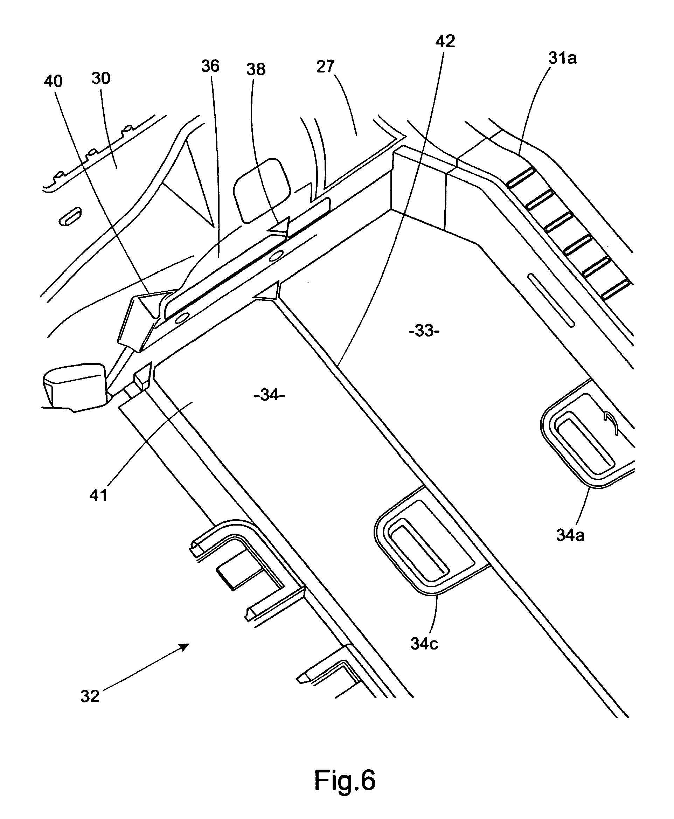

Referring now to Figures 6 to 8, a luggage system according to a second embodiment of the invention is installed in a luggage compartment (27) having a luggage compartment floor (28), first and second side walls (29, 30), a front end (31) having a front ridge (3 1a), and a rear end (32). The luggage system according to the second embodiment comprises front and rear movable boards (33, 34), each having a handle (34a), and first and second elevated support members (35, 36).

The first and second elevated support members (35, 36) comprise horizontal ledges integral with, or for mounting upon, the first and second side walls (29, 30) respectively, and are suitable for supporting the front and rear movable boards (33, 34) in a horizontal position, elevated above the luggage compartment floor (28).

The elevated support members (35, 36) are assisted by locating features which, in use, stabilise the supported boards (33, 34) in their position. The side walls (29, 30) of the luggage compartment (27) act as locating features by restricting movement of the boards (33, 34) transversely (i.e. in a front-to-rear vehicle direction), as does the front ridge (31a), which prevents the front board (33) from moving forwards too far; additionally, the first and second elevated support members (35, 36) comprise a first and a second pair of stabilising protrusions respectively. Each pair of stabilising protrusions comprises a forward stabilising protrusion (37, 38) and a rear stabilising protrusion (39, 40), both of which project above the level of their associated horizontal ledge.

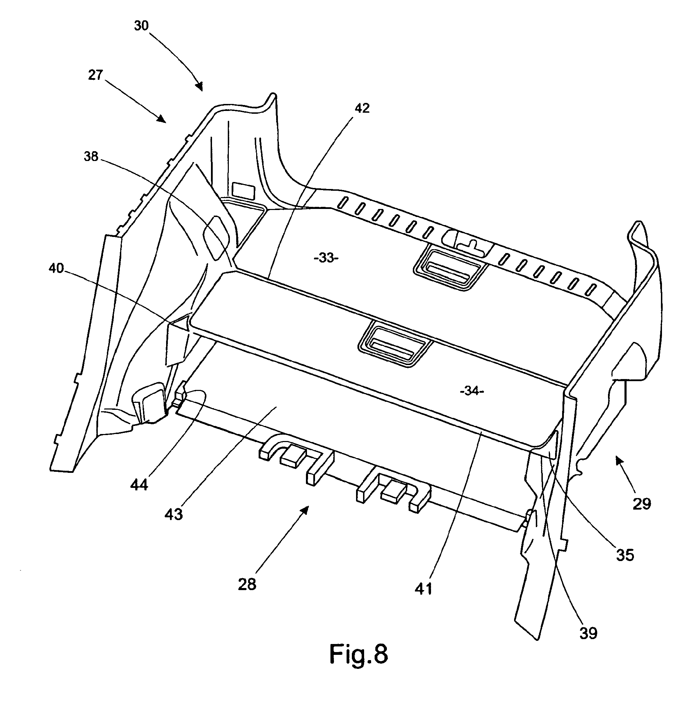

The rear stabilising protrusions (39, 40) prevent the rear board (34) from moving too far towards the rear of the vehicle by engaging with the rear board's rearwards facing edge (41) when it is supported by the elevated support members (35, 36), as seen in Figure 8. By contrast, the forward stabilising protrusions (37, 38) prevent the rear board (34) from moving too far forward by engaging with its forward facing edge (42). The forward stabilising protrusions (37, 38) also perform the function of preventing the front board (33) from moving too far towards the rear of the vehicle when it is supported by the elevated support members (35, 36) as seen in Figure 8.

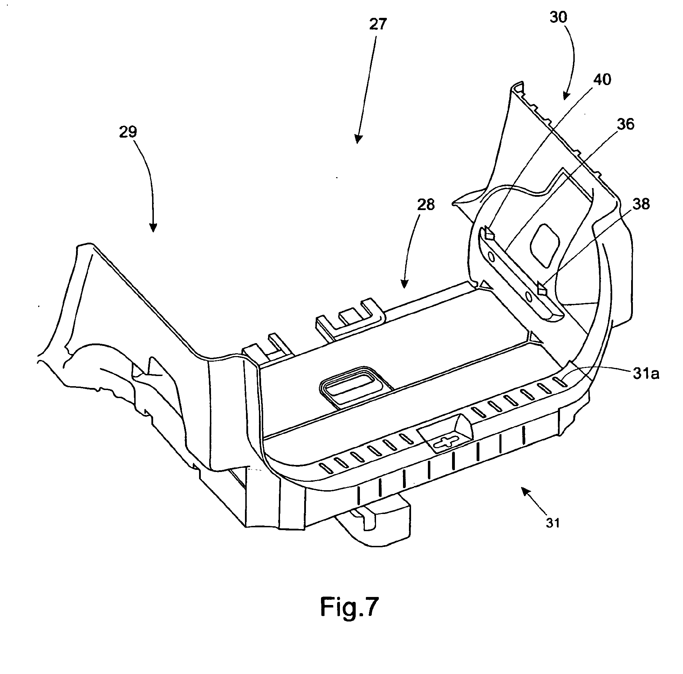

The front and rear boards (33, 34) have indentations suitable for engaging with the stabilising protrusions (37, 38, 39, 40) and are shaped such that they can be held in place individually by the locating features acting in combination with the elevated horizontal support members (35, 36). Referring to Figures 6 and 7, when the front and rear boards (33, 34) are not required to be in their elevated positions, they are conveniently stored on the luggage compartment floor (28), which comprises a cavity (43) specifically shaped, with the help of protrusions (44), to receive and secure them in place individually. In this embodiment the cavity (43) and protrusions (44) of the luggage compartment floor (28) are compatible with the locating features and the horizontal support members (35, 36), i.e. the front and rear boards' shapes enable them to be held in place and stabilised selectively, separately or together, on the horizontal support members (35, 36) and the luggage compartment floor.

Since the boards (33, 34) are stabilised individually when they rest on the elevated support members (35, 36), and are also secured in place individually when stored on the luggage compartment floor (28), they can be moved individually and independently between stored and elevated positions. This provides the user of the second embodiment with a great degree of flexibility in terms of creating configurations for carrying luggage.

It will be appreciated that the specific embodiments described herein are non-limiting examples. For instance, the shapes of the boards and supporting/stabilising features described herein may vary. The boards need not necessarily be rectangular with triangular indentations at their corners (essentially cutting off the corners as best illustrated by Figures 6 to 8) and may instead, for instance, be square round or triangular. The indentations and associated supporting/stabilising features may be of any suitable shape and located in any position suitable for stabilising the boards, although the specific arrangements described herein are preferred. Furthermore, the skilled person will appreciate that it is within the scope of the invention to create hybrids of the specific embodiments described herein, i.e. to use the individual features of the specific embodiments in different combinations without departing from the scope of the invention.

## Claims

1. A luggage system for use in a luggage storage compartment (1; 27) of a vehicle, the luggage storage compartment (1 ; 27) being defined, in part, by first and second opposed interior walls (3, 4; 29, 30) of the vehicle, the luggage system comprising:
two or more movable boards (15, 16; 33, 34) for supporting luggage, wherein the movable boards (15, 16; 33, 34) are movable independently of one another; and
support means for the movable boards (15, 16; 33, 34), the support means including first and second support bars or ledges (7, 8, 9, 10; 35, 36), which is mountable on respective ones of the opposed interior walls (3, 4; 29, 30),
wherein the movable boards (15, 16; 33, 34) provide a first luggage storage configuration in which the boards (15, 16; 33, 34) are supported upon a floor (2; 28) of the luggage compartment (1; 27) and a second luggage storage configuration in which the movable boards (15, 16; 33, 34) are elevated above the luggage compartment floor (2; 28) to support luggage, wherein the elevated first and second movable boards (15, 16; 33, 34) rest upon the first and second support bars or ledges, respectively, when in the second luggage storage configuration,
wherein the luggage system includes means (11, 12, 13, 14; 29, 30, 31a, 37, 38, 39, 40) for stabilising at least one elevated one of the first and second movable boards (15, 16; 33, 34) when supported on the first and second support bars or ledges (7, 8, 9, 10; 35, 36), and
wherein each of the first and second support bars (7, 8, 9, 10; 35, 36) includes at least one locating feature means (11, 12, 13, 14; 31a, 37, 38, 39, 40) to prevent movement of at least one elevated one of the first and second movable boards (15, 16; 33, 34), along a front-to-rear vehicle direction, when the second luggage compartment configuration is provided.

2. The luggage system as claimed in claim 1, wherein at least one of the movable boards (15, 16; 33, 34) comprises an indentation or formation for co-operation with the stabilising means (11, 12, 13, 14; 29, 30, 31a, 37, 38, 39, 40).

3. The luggage system as claimed in claim 1 or claim 2, wherein each of the movable boards (15, 16; 33, 34) has first and second board sides, the first and second board sides being mountable upon a respective one of the first and second support bars (7, 8, 9, 10; 35, 36).

4. The luggage system as claimed in claim 1 or claim 2, wherein each of the movable boards (15, 16; 33, 34) has first and second board sides, the first and second board sides being mountable, in sliding fashion, within a channel defined in the respective one of the first and second support bars (7, 8, 9, 10; 35, 36).

5. The luggage system as claimed in any one of claims 1 to 4, wherein the movable boards (15, 16; 33, 34) are separate and distinct components.

6. The luggage system as claimed in any one of claims 1 to 4, wherein the movable boards (15, 16; 33, 34) are connected to each other.

7. The luggage system as claimed in any one of claims 1 to 6, wherein the floor (2; 28) of the luggage compartment (1; 27) includes means (43) for stabilising at least one movable board, when supported upon the floor (2; 28).

8. The luggage system as claimed in claim 7, wherein the floor (2; 28) of the luggage compartment (1; 27) includes at least one locating feature (43) to prevent movement of a movable board, along a front-to-rear vehicle direction, when supported on the floor.

9. The luggage system as claimed in claim 7 or claim 8, wherein at least one of the movable boards (15, 16; 33, 34) comprises an indentation (22) or formation for co-operation with the stabilising means (43) of the floor (2; 28) of the luggage compartment (1; 27).

10. The luggage system as claimed in any one of claims 1 to 9, wherein the boards (15, 16; 33, 34) are movable to provide a third luggage compartment configuration in which at least one of the movable boards (15, 16; 33, 34) is arranged to be substantially vertical.

11. The luggage system as claimed in any one of claims 1 to 10, wherein each of the movable boards (15, 16; 33, 34) is provided with a handle (17; 34a) for manoeuvring the board between different luggage compartment configurations.

## Patentansprüche

1. Gepäcksystem zur Verwendung in einem Gepäckaufbewahrungsraum (1; 27) eines Fahrzeugs, wobei der Gepäckaufbewahrungsraum (1; 27) teilweise durch eine erste und eine zweite, einander gegenüberliegende Innenwand (3, 4; 29, 30) des Fahrzeugs definiert ist und das Gepäcksystem Folgendes umfasst:
zwei oder mehr bewegliche Platten (15, 16; 33, 34) zum Tragen von Gepäck, wobei die beweglichen Platten (15, 16; 33, 34) unabhängig voneinander beweglich sind; und
Tragmittel für die beweglichen Platten (15, 16; 33, 34), wobei die Tragmittel erste und zweite Tragstangen oder -simse (7, 8, 9, 10; 35, 36) umfassen, die an jeweiligen der einander gegenüberliegenden Innenwände (3, 4; 29, 30) montierbar sind,
wobei die beweglichen Platten (15, 16; 33, 34) eine erste Gepäckaufbewahrungskonfiguration, in der die Platten (15, 16; 33, 34) auf einem Boden (2; 28) des Gepäckraums (1; 27) getragen werden und eine zweite Gepäckaufbewahrungskonfiguration, in der die beweglichen Platten (15, 16; 33, 34) über dem Gepäckraumboden (2; 28) erhöht sind, um Gepäck zu tragen bereitstellen, wobei die erhöhten ersten und zweiten beweglichen Platten (15, 16; 33, 34) auf den ersten beziehungsweise den zweiten Tragstangen oder -simsen liegen, wenn sie sich in der zweiten Gepäckaufbewahrungskonfiguration befinden,
wobei das Gepäcksystem Mittel (11, 12, 13, 14; 29, 30, 31a, 37, 38, 39, 40) zum Stabilisieren von mindestens einer erhöhten der ersten und der zweiten Platten (15, 16; 33, 34), wenn sie auf den ersten und zweiten Tragstangen oder -simsen (7, 8, 9, 10; 35, 36) getragen werden umfasst, und
wobei die ersten und die zweiten Tragstangen (7, 8, 9, 10; 35, 36) jeweils mindestens ein Haltemerkmalmittel (11, 12, 13, 14; 31a, 37, 38, 39, 40) umfassen, um die Bewegung mindestens einer erhöhten der ersten und zweiten beweglichen Platte (15, 16; 33, 34) entlang einer Fahrzeuglängsrichtung zu verhindern, wenn die zweite Gepäckraumkonfiguration bereitgestellt wird.

2. Gepäcksystem nach Anspruch 1, wobei mindestens eine der beweglichen Platten (15, 16; 33, 34) eine Einbuchtung oder ein Gebilde zum Zusammenwirken mit den Stabilisierungsmitteln (11, 12, 13, 14; 29, 30, 31a, 37, 38, 39, 40) umfasst.

3. Gepäcksystem nach Anspruch 1 oder Anspruch 2, wobei die beweglichen Platten (15, 16; 33, 34) jeweils eine erste und eine zweite Plattenseite haben, wobei die erste und die zweite Plattenseite auf einer jeweiligen der ersten und zweiten Tragstangen (7, 8, 9, 10; 35, 36) montierbar sind.

4. Gepäcksystem nach Anspruch 1 oder Anspruch 2, wobei die beweglichen Platten (15, 16; 33, 34) jeweils eine erste und eine zweite Plattenseite haben, wobei die erste und die zweite Plattenseite auf gleitende Weise in einer in der jeweiligen der ersten und zweiten Tragstangen (7, 8, 9, 10; 8, 9, 10) ausgebildeten Rille montierbar sind.

5. Gepäcksystem nach einem der Ansprüche 1 bis 4, wobei es sich bei den beweglichen Platten (15, 16; 33, 34) um getrennte und voneinander verschiedene Komponenten handelt.

6. Gepäcksystem nach einem der Ansprüche 1 bis 4, wobei die beweglichen Platten (15, 16; 33, 34) miteinander verbunden sind.

7. Gepäcksystem nach einem der Ansprüche 1 bis 6, wobei der Boden (2; 28) des Gepäckraums (1; 27) ein Mittel (43) zum Stabilisieren mindestens einer beweglichen Platte, wenn diese auf dem Boden (2; 28) getragen wird, umfasst.

8. Gepäcksystem nach Anspruch 7, wobei der Boden (2; 28) des Gepäckraums (1; 27) mindestens ein Haltemerkmal (43) umfasst, um die Bewegung einer beweglichen Platte in einer Fahrzeuglängsrichtung zu verhindern, wenn diese auf dem Boden getragen wird.

9. Gepäcksystem nach Anspruch 7 oder Anspruch 8, wobei mindestens eine der beweglichen Platten (15, 16; 33, 34) eine Einbuchtung (22) oder ein Gebilde zum Zusammenwirken mit dem Stabilisierungsmittel (43) des Bodens (2; 28) des Gepäckraums (1; 27) umfasst.

10. Gepäcksystem nach einem der Ansprüche 1 bis 9, wobei die Platten (15, 16; 33, 34) beweglich sind, um eine dritte Gepäckraumkonfiguration bereitzustellen, in der mindestens eine der beweglichen Platten (15, 16; 33, 34) dazu angeordnet ist, im Wesentlichen vertikal zu sein.

11. Gepäcksystem nach einem der Ansprüche 1 bis 10, wobei die beweglichen Platten (15, 16; 33, 34) jeweils mit einem Griff (17; 34a) zum Manövrieren der Platte zwischen verschiedenen Gepäckraumkonfigurationen ausgestattet sind.

## Revendications

1. Système de porte-bagages destiné à être utilisé dans un compartiment (1 ; 27) de rangement des bagages d'un véhicule, le compartiment (1 ; 27) de rangement des bagages étant défini, en partie, par une première et deuxième parois (3, 4 ; 29, 30) intérieures opposées du véhicule, le système de porte-bagages comportant :
deux panneaux (15, 16 ; 33, 34) mobiles ou plus pour supporter des bagages, les panneaux (15, 16 ; 33, 34) mobiles pouvant être déplacés indépendamment l'un de l'autre; et
un moyen de support pour les panneaux (15, 16 ; 33, 34) mobiles, le moyen de support comprenant une première et deuxième barres (7, 8, 9, 10 ; 35, 36) de support ou rebords, qui peuvent être montés sur les parois (3, 4 ; 29, 30) intérieures opposées respectives,
dans lequel les panneaux (15, 16 ; 33, 34) mobiles fournissent une première configuration de rangement des bagages dans laquelle les panneaux (15, 16 ; 33, 34) sont supportés sur un sol (2 ; 28) du compartiment (1 ; 27) à bagages et une deuxième configuration de rangement des bagages dans laquelle les panneaux (15, 16 ; 33, 34) mobiles sont surélevés par rapport au sol (2 ; 28) du compartiment à bagages pour supporter les bagages, dans lequel les premier et deuxième panneaux (15, 16 ; 33, 34) mobiles surélevés reposent respectivement sur les première et deuxième barres de support ou rebords, quand ils sont dans la deuxième configuration de rangement des bagages,
dans lequel le système de porte-bagages comprend des moyens (11, 12, 13, 14 ; 29, 30, 31a, 37, 38, 39, 40) de stabilisation d'au moins un des premier et deuxième panneaux (15, 16 ; 33, 34) mobiles surélevés quand ils sont supportés sur les première et deuxième barres (7, 8, 9, 10 ; 35, 36) de support ou rebords, et dans lequel chacune des première et deuxième barres (7, 8, 9, 10 ; 35, 36) de support comprend au moins un des moyens (11, 12, 13, 14 ; 31a, 37, 38, 39, 40) de caractéristiques de positionnement pour empêcher le mouvement d'au moins un des premier et deuxième panneaux (15, 16 ; 33, 34) mobiles surélevés, dans un sens allant de l'avant vers l'arrière dudit véhicule, quand la deuxième configuration de compartiment à bagages est fournie.

2. Système de porte-bagages selon la revendication 1, dans lequel au moins un des panneaux (15, 16 ; 33, 34) mobiles comporte une échancrure ou découpure pour coopérer avec les moyens (11, 12, 13, 14 ; 29, 30, 31a, 37, 38, 39, 40) de stabilisation.

3. Système de porte-bagages selon la revendication 1 ou la revendication 2, dans lequel chacun des panneaux (15, 16 ; 33, 34) mobiles possède un premier et deuxième côtés de panneau, les premier et deuxième côtés de panneau pouvant être montés sur une des première et deuxième barres (7, 8, 9, 10 ; 35, 36) de support respectives.

4. Système de porte-bagages selon la revendication 1 ou la revendication 2, dans lequel chacun des panneaux (15, 16 ; 33, 34) mobiles possède un premier et deuxième côtés de panneau, les premier et deuxième côtés de panneau pouvant être montés, d'une manière coulissante, à l'intérieur d'un chenal défini dans l'une des première et deuxième barres (7, 8, 9, 10 ; 35, 36) de support respectives.

5. Système de porte-bagages selon l'une quelconque des revendications 1 à 4, dans lequel les panneaux (15, 16 ; 33, 34) mobiles sont des éléments séparés et distincts.

6. Système de porte-bagages selon l'une quelconque des revendications 1 à 4, dans lequel les panneaux (15, 16 ; 33, 34) mobiles sont reliés les uns aux autres.

7. Système de porte-bagages selon l'une quelconque des revendications 1 à 6, dans lequel le sol (2 ; 28) du compartiment (1 ; 27) à bagages comprend un moyen (43) de stabilisation d'au moins un panneau mobile, quand il est supporté sur le sol (2 ; 28).

8. Système de porte-bagages selon la revendication 7, dans lequel le sol (2 ; 28) du compartiment (1 ; 27) à bagages comprend au moins une caractéristique de positionnement (43) pour empêcher le mouvement d'un panneau mobile, dans un sens allant de l'avant vers l'arrière du véhicule, quand il est supporté sur le sol.

9. Système de porte-bagages selon la revendication 7 ou la revendication 8, dans lequel au moins un des panneaux (15, 16 ; 33, 34) mobiles comporte une échancrure (22) ou découpure pour coopérer avec le moyen (43) de stabilisation du sol (2 ; 28) du compartiment (1 ; 27) à bagages.

10. Système de porte-bagages selon l'une quelconque des revendications 1 à 9, dans lequel les panneaux (15, 16 ; 33, 34) sont mobiles pour fournir une troisième configuration de compartiment à bagages dans laquelle au moins un des panneaux (15, 16 ; 33, 34) mobiles est disposé de façon à être essentiellement vertical.

11. Système de porte-bagages selon l'une quelconque des revendications 1 à 10, dans lequel chacun des panneaux (15, 16 ; 33, 34) mobiles est muni d'une poignée (17 ; 34a) pour manoeuvrer le panneau entre différentes configurations de compartiment à bagages.
